Europäisches Patentamt

European Patent Office

Office européen des brevets

(19)

(11) Publication number: **0 119 818**
A2

# EUROPEAN PATENT APPLICATION

(12)

(21) Application number: **84301698.1**

(22) Date of filing: **13.03.84**

(51) Int. Cl.³: **C 02 F 3/04**, C 02 F 3/10,
C 02 F 3/30

(30) Priority: **17.03.83 GB 8307425**

(43) Date of publication of application: **26.09.84**
**Bulletin 84/39**

(84) Designated Contracting States: **AT BE CH DE FR GB IT
LI LU NL SE**

(71) Applicant: **Jensen, Geoffrey Harold, 63/65 Bedford
Road, Barton le Clay Bedford MK45 4LL (GB)**

(72) Inventor: **Jensen, Geoffrey Harold, 63/65 Bedford Road,
Barton le Clay Bedford MK45 4LL (GB)**

(74) Representative: **Britter, Keith Palmer et al, POLLAK
MERCER & TENCH High Holborn House 52/54 High
Holborn, London WC1V 6RY (GB)**

(54) **Sewage treatment plant.**

(57) A sewage treatment plant and associated method in which
sewage is introduced through an inlet (16) of a tank (10) or
other suitable container installed in the ground, to form a
liquid consisting of partially-treated sewage and biomass for
treatment in the tank (10), with a biological filter (42) located
in the tank (10) above the liquid and having a plurality of
inclined or at least substantially upright filter passages (43).
At least one airlift tube (39, 40) extends from a lower location
(41) within the sewage biomass to an upper location above the
filter (42), whereby air introduced into the lower end (41) of
the or each lift tube (39, 40) directs biomass material on to
the upper part of the biological filter (42), to recycle and
oxidise the biomass.

-1-

SEWAGE TREATMENT PLANT

DESCRIPTION

This invention relates to sewage treatment plant and is particularly, but not exclusively, concerned with sewage plant suitable for installation below ground and, also, for single dwellings or small communities in place of the conventional cesspool or septic tank used where main drainage is not available.

Cesspools and septic tanks are generally unsatisfactory and their use involves several problems and disadvantages, including a tendency to generate odours, to pollute the surroundings, for instance if overfilling occurs, and the need for regular emptying by tanker. Houses and other dwellings and small communities located where main drainage is not provided have a need for an improved form of apparatus or plant for the treatment of the resultant sewage and the present invention provides a simple and efficient way of meeting this need.

According to an aspect of the invention, a sewage treatment plant comprises a tank or other container suitable for installation in the ground, an inlet for introducing sewage into the container and forming a liquid comprising partially-treated sewage and biomass for treatment in the container, a biological filter located in the container above the liquid and having a plurality of inclined or at least substantially upright filter passages and at least one air lift tube extending from a lower location within the sewage biomass to an upper location above the filter, whereby air introduced into the lower end of the lift tube directs biomass material on to the upper part of the biological filter, whereby the biomass is recycled and oxidised.

The treatment plant of the invention affords a number of advantages, including the following:

As already mentioned, it is particularly suitable for single houses and other dwellings and small communities, but the plant and its method of operation can also be used for larger population centres.

It contains no electro-mechanical components within the buried structure; this is an important advantage if the plant has to be sited in areas where flooding may occur.

The sewage is not stored for long periods before treatment and this helps to reduce the risk of the development of septic conditions and hence odours.

The sewage is treated by a biological filter which, in accordance with a preferred feature of the plant, has a large void volume and a high surface area.

The treatment effected in the plant results in incoming sewage mixing with settling biomass and this is subjected to airlift or other pumping to the top of the biofilter. Distribution over the top of the biofilter is achieved by exhausting the air from the air lift below an upper standing water level.

Continual recirculation of the biomass by the airlift ensures:

(a) seeding of the sewage with organisms which oxidise it to harmless gases, salts and water;

(b) reduction of the amount of humus sludge produced;

(c) a greater possibility of nitrifying the ammonia present, by increasing the residence time of the slower-multiplying nitrifying bacteria and by reducing the carbonaceous B.O.D. levels of the sewage by mixing with treated sewage, so as to allow nitrifiers to predominate;

(d) the airlift air is utilised both in order to effect mixing of the biomass and sewage and to provide oxygen to the biomass;

(e) as the circulating biomass falls from the filter, it absorbs pollutants from the sewage;

(f) the airlifts gradually pump liquid to the final settling tank;

The biological filter matrix preferably comprises a plurality of upright or inclined sheets or plates of high capillarity alternating with sheets or plates of a dimpled, corrugated or other raised surface, thus forming a large number of upright or inclined channels; alternative forms of biofilters can comprise:

I. An enhanced surface area of polyethylene or polypropylene or any suitable material.

II. An area of open mesh or random fibrous material having high voids volume and capillarity.

(a) The capillarity ensures distribution over the filter area.

(b) The alternate areas are vertical or inclined to the vertical.

(c) The layers are spaced by the 'dimpling', corrugation or otherwise of one or other of the materials. The reversal or other displacement ensuring contact at high points only.

(d) The provision of a large void ratio by using thin and light material, structurally enhanced by shaping and joining the materials together;

The settling and mixing tank, below the matrix serves to create an anoxic zone during certain periods of operation, so enabling denitrification to occur;

The continual dripping of the biomass and treated sewage from the biofilter matrix helps to prevent the accumulation of floating sludge on the surface of the mixing zone;

The final settling preferably incorporates a balancing device which reduces the effect of surge flows;

The balancing device advantageously consists of an open material which typically retains particles of above 100 microns, but has a very high void ratio and exhibits capillary action at a known rate. This is disposed over a weir which is located at the highest desirable water level, but above the outlet by as large an amount as is practical.

The main advantages and features of the sewage treatment plant of the invention may be summarised as follows:

Recirculation of the biomass (or humus sludge) after it has settled through a mixture of incoming and treated sewage, followed by oxidation of the biomass by passing it over a biological filter;

The improved form of biological filter preferably incorporated in the plant and having vertical plates of alternately high and low surface tension, one flat and the other corrugated or preferably dimpled by half spheres, on each side of the plates;

The flow through the final settling tank is balanced by lowering the water level by capillary elevation over a weir to the lower outlet. In order that the invention may be more fully understood and appreciated, a preferred form of the sewage treatment plant is described below in conjunction with the accompanying

0119818

-5-

drawings, in which:

Fig.1 is a diagrammatic general arrangement drawing in vertical section through a typical form of sewage treatment plant;

Fig.2 is a diagrammatic plan view of the plant shown in Fig. 1 at the level of the top of the biofilter;

Fig. 3 is a plan view with a detail on an enlarged scale of the preferred form of biofilter comprising alternate dimpled and flat sheets of fibrous material.

Fig. 4 is a vertical section through the filter matrix showing the appearance of each face of the non-flat sheets or plates.

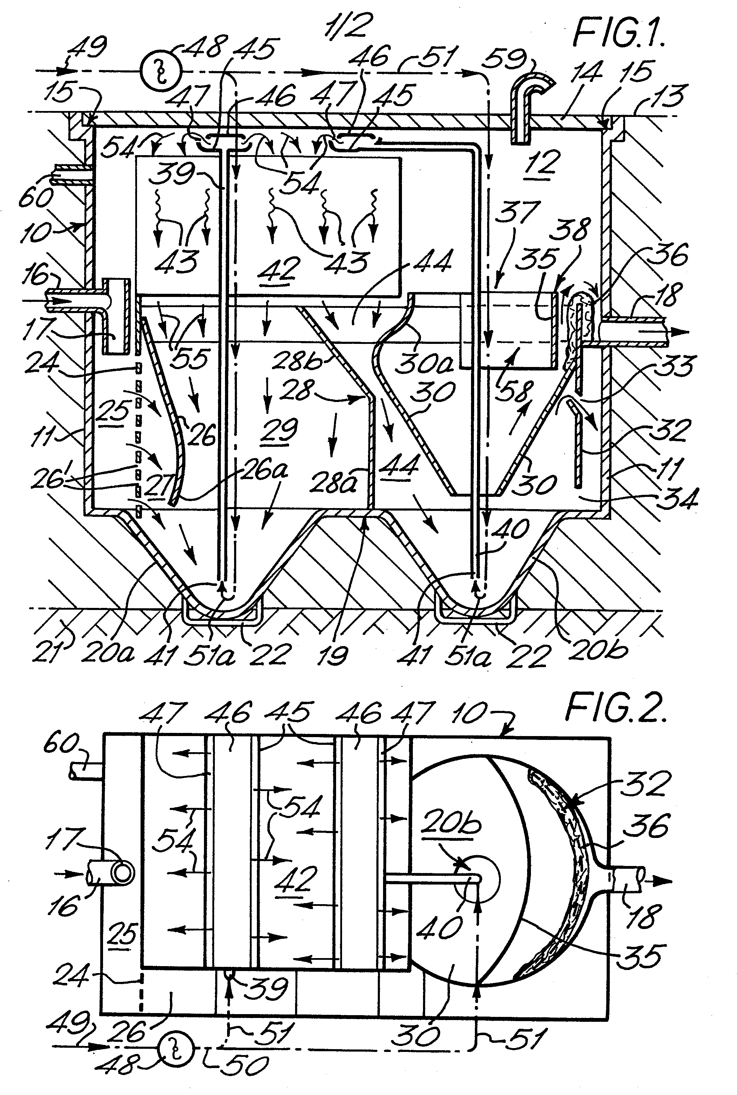

Referring to Fig.1, the sewage treatment plant is housed within a tank 10 which may be of any shape, e.g. circular or square or, as shown, rectangular in plan, having opposed end walls 11 and opposed side walls, one of which is shown at 12. The tank 10 is intended to be buried so that its upper rim is at ground level, indicated diagrammatically at 13 in Fig.1. The tank 10 is covered approximately at ground level by a cover 14 which can be supported for instance on a step 15 formed at the top edges of the end and side walls 11 and 12. In one end wall 11, an inlet pipe 16 for the sewage to be treated passes through the end wall 11 somewhat above the mid-level of the tank 10 and terminates inside the tank in an anti-syphon device 17. At the opposite end wall 11 an outlet pipe 18 passes through the centre of the end wall. The base 19 of the tank, as indicated diagrammatically in Fig.2, includes two generally conical downwardly-directed wells 20, the rounded lowest portions of which are located approximately on the mid-line of the tank 10 between the inlet pipe 16 and the outlet pipe 18. A concrete base slab 21 is disposed in a pit or other cavity in the ground in which the tank 10 is located and the tank 10 is anchored to the base slab 21 for instance by anchor members 22 attached to the outside of the wells 20 in the base 19. The pit or cavity 23 which receives the sewage treatment plant is preferably lined with concrete and the otherwise open spaces beneath the base 19 are preferably filled as the tank 10 is installed so as to provide firm support for the treatment plant over the whole area of its base 19.

A number of partitions extend between the opposed side walls 12 so as to divide the lower part of the interior of the tank 10 into a number of regions in which different aspects of the sewage treatment process take place. As explained in more detail below, these transverse partitions rise within the tank 10 to approximately the level of the inlet and outlet pipes 16 and 18 and either extend to the base 19 or down to a level standing above the base, the details of which are indicated below. Immediately adjacent the inlet pipe 16 and its anti-syphon device 17 a vertical screen plate 24 is located within the tank 10 and defines with the side walls 12 and the inlet end wall 11 a region 25 for collecting and holding coarse solids until biodegradation enables them to pass through the apertures 26 in the screen plate 24 into the remainder of the tank 10. An inclined divider plate 26 extends between the side walls 12, having its top adjacent the top of the screen plate 24 and its lower edge disposed above the edge of the well 20a nearer the inlet end of the tank provided with the inlet pipe 16 and curving towards the bottom of the screen plate 24, as shown at 26a. An inlet zone 27 directing incoming sewage from the screen plate 24 towards the first well 20a is thus formed. A part-vertical part-inclined divider plate 28 comprising a lower vertical part 28a and an upper inclined part 28b is mounted across the tank 10 between the side walls 12, the lower edge of the vertical part 28a being sealed to the base 19 of the tank between the wells 20a and 20b and the inclined part 28b tilting back toward the inlet pipe 16. The vertical part 28a of the plate 28 additionally may be fitted with a differential pressure operating valve to prevent bursting. The region 29 between the side walls 12 and the divider plates 26 and 28 forms an anoxic zone 29 when the treatment plant is in operation. The space in the tank 10 on the other side of the divider plate 28 and between it and the end wall 11 to which the outlet pipe 18 is attached houses a downwardly-directed generally conical structure 30 which, adjacent the divider plate 28, is curved at its upper end 30a towards the outlet pipe 18; this also houses an upright cylindrical or part-cylindrical plate 32 having sludge overflow slots 33,34 either formed in it (33) or left beneath its lower edge between the plate 32 and the base 19 of the tank 10 (34). As shown in Fig.2, the upper part of the cylinder 32 curves about the vertical axis of the second well 20b and, inboard from it in relation to the direction of flow through the plant, a baffle plate 35 is located. A capilliary overflow mat 36 is draped over the upper edge of the cylinder 32 throughout half its entire arcuate length, as shown best in Fig.2. The upper edge of the cylinder 32 represents the nominal upper liquid level in the tank and the upper edge 38 of the baffle plate 35 extends to a greater height as shown best in Fig. 1. Extending from adjacent the lowest point of each well 20a, 20b is an air-lift tube, the air-lift tube in the first well 20 being shown at 39 and that in the second well 20 being shown at 40. The open lower end 41 of each air-lift tube 39,40 is located a short distance above the lowermost region of each of the wells 20.

In the upper region of the tank 10 above the upper liquid level 37 is mounted a biofilter matrix 42, the detailed construction of which includes a plurality of substantially vertical channels, as indicated in Fig.1 by the arrows 43, the detailed construction of the filter matrix 42 being explained below. The filter matrix 42 extends from one side plate 12 of the tank 10 towards the other end, lengthwise of the tank 10, from the upper edge of the screen plate 24 to adjacent the upper edge 30a of the plate 30. Treated sewage and biomass falling from the underside of the filter matrix 42 thus falls partly into the region of the tank 10 bounded by the sidewalls 12 and the divider plates 26 and 28, thus being directed into the anoxic zone 29, while the remainder falls into a region 44, bounded again by the relevant parts of the side walls 12, the angled two-part divider plate 28 and the structure 30, the region 44 directing this part of the treated sewage and biomass towards the end well 20b and the bottom end 41 of the second air-lift tube 40. Each of the air-lift tubes 39,40 is connected to a trough-shaped outlet 45 which extends across the width of the biofilter matrix 42, a guide plate 46 being located above each trough-shaped outlet 45 so that the material raised from the wells 20 of the tank 10 by each of the air-lift tubes 39,40 is conveyed under the upward influence of the air-lift to the troughs 45 and out through the opposed outlet slots 47 defined by the trough 45 and guide plate 46 attached to each air-lift tube 39,40. Externally of the tank, for instance in a suitable weather-proof structure on the ground adjacent the sewage treatment plant, an air pump 48, preferably electrically driven, has its inlet 49 connected to atmosphere and its outlet 50 connected by air supply pipes, indicated diagrammatically by chain-dotted lines 51, to outlet nozzles 51a located respectively beneath and directed into the open lower ends 41 of the air lift tubes 39,40. Ventilation to provide oxygen for the biomass on the biofilter is provided by a ventilation pipe 59 in the cover 14 and, if required, another pipe 60 in the wall 11 adjacent the sewage inlet 16.

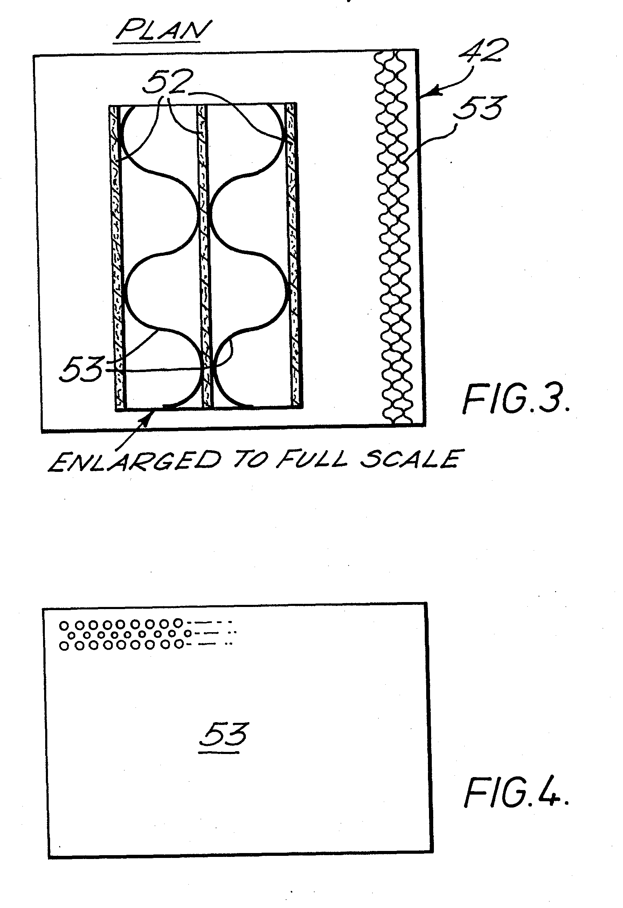

Referring to Figs. 3 and 4, the filter matrix 42 consists of alternate sheets 52 of flat configuration and sheets 53 of dimpled, corrugated or other non-flat configuration, either of the sheets 52 and 53 preferably being made of alternately fibrous and smooth material. The sheets 52 and 53 are preferably made of two materials which alternately are of positive and negative angle of surface tension. The sheets 52, 53 are assembled so as to be in contact with one another and the non-flat configuration of the sheets 53 ensures that there are a substantial number and volume of generally upright filter channels in the matrix 42 as shown by the enlarged fragmentary view included in Fig.3.

In operation, sewage to be treated is supplied to the tank 10 via the inlet pipe 16 and except for any coarse solids retained by the screen-plate 24 passes via the inlet region 25 to the first well 20a at the bottom end of the air-lift tube 39. The settled biomass and sewage is oxygenated and air-lifted by the rising air in the tube 39 and passes to the associated trough 45 and guide-plate 46, where the air-lifted material is distributed across the upper part of the filter matrix 42, as indicated by the arrows 54 in Fig.2. The material then falls through the vertical or substantially vertical channels indicated by the arrows 43 in the filter matrix 42 where it is further oxidised and then passes as indicated diagrammatically by the arrows 55 into the anoxic zone 29. As a result of this action, when operation of the treatment plant reaches a state of substantial equilibrium, the water in the biomass undergoes circulation from the well 20a up to the top of the filter and then down via the anoxic zone 29 to the well again and the bacteria effecting degradation of the biomass are found to circulate faster than the water.

A part of the biomass undergoing downward movement in the filter matrix 42 passes into the region 44 so that it reaches the lower part of the second well 20b and undergoes further airlifting via the air-lift tube 40. This re-directs the material to the associated trough 45 and guideplate 46, so that the material is again distributed across the width of the filter matrix 42 via the outlet slots 47 also indicated in Fig.2. As a result of this continuing and repeated action, the region above the second well 20b operates as a final settling tank and the supernatent water lies between a bottom water level indicated by the line 58 and the upper water level 37 represented by the height of the lowest part of the outlet pipe 18 and the upper edge 38 of the plate 32 respectively. The water is permanently in contact with the lowest part of the capilliary mat 36 and therefore passes up and over the overflow plate 32 and leaves the tank 10 via the outlet pipe 18. The treatment of the sewage effected is such that under normal operation the water discharged is of a sufficiently high level of purification to be dischargeable into an adjacent stream or other water-course without any risk of environmental pollution. As a result of the sludge overflow slots 33,34 this collects in the adjacent region of the tank 10 and can be emptied for instance during an annual maintenance and servicing operation carried out on the treatment plant. It is found that a treatment plant according to the invention suitable for supplying the sewage treatment needs of a bungalow or house operates entirely satisfactorily and the ability of the provision made for the water level to change between the upper level 37 and the lower level 58 enables the treatment plant to deal adequately with increased sewage discharge. In general, the plant operates at a maximum 20 mg/1 B.O.D. and 30 mg/1 suspended solids in the discharged effluent when the inflowing sewage quantity and strength are within the normal design operating conditions.

Although in the embodiment described above the balancing arrangement for the overflow to the outlet pipe 18 is provided by the capillary mat 36 draped over the upper edge of the cylinder 32, such an arrangement may also be provided by the action of at least one of the air lift tubes 39,40 in combination with the final settling tank region 44, whereby treated liquid sewage is gradually pumped to the region 44, via the filter 42, for subsequent removal via the outlet 18.

CLAIMS

1. A sewage treatment plant comprising a tank or other container (10) suitable for installation in the ground, an inlet (16) for introducing sewage into the container (10) and forming a liquid consisting of partially-treated sewage and biomass for treatment in the container (10), a biological filter (42) located in the container (10) above the liquid and having a plurality of inclined or at least substantially upright passages (43), characterised by at least one air lift tube (39,40) which extends from a lower location within the sewage biomass to an upper location above the filter (42), whereby air introduced into the lower end (41) of the or each air lift tube (39,40) directs biomass material on to the upper part of the biological filter (42), to recycle and oxidise the biomass.

2. A sewage treatment plant according to claim 1, in which the biological filter (42) has a large void volume and a high surface area.

3. A sewage treatment plant according to claim 1 or 2, in which the biological filter (42) has a matrix comprising an open mesh or random fibrous material.

4. A sewage treatment plant according to claim 1 or 2, in which the biological filter (42) has a matrix comprising a plurality of upright or inclined sheets or plates (52) of high capillarity alternating with sheets or plates (53) of a dimpled, corrugated or other raised surface, which sheets or plates (52,53) define therebetween the plurality of inclined or at least substantially upright filter passages (43).

5. A sewage treatment plant according to any preceding claim including a final settling tank region (44) for treated liquid sewage, an associated outlet (18) for removal of treated liquid sewage from the tank or other container (10), and a balancing arrangement for reducing the effect of surge flows of liquid sewage towards the outlet (18).

6. A sewage treatment plant according to claim 5, in which the balancing arrangement is constituted by a combination of the final settling tank region (44) and the or at least one of the air lift tubes (39, 40), whereby the latter gradually pumps treated liquid sewage to the final settling tank region (44) for subsequent removal from the tank or other container (10) via the outlet (18).

7. A sewage treatment plant according to claim 5 or 6, in which the balancing arrangement comprises a capillary material (36) which is located between an upper part of the final settling tank region (44) and the outlet (18) and which causes treated liquid sewage at the level of the upper part of the final settling tank region (44) to flow under capillary action from the upper part of the final settling tank region (44) to the outlet (18).

8. A sewage treatment plant according to claim 7, in which the capillary material (36) is disposed over a weir which is located between the final settling tank region (44) and the outlet (18) and above the latter.

9. A sewage treatment plant according to any of claims 5 to 8, in which at least a portion of the biological filter extends over the final settling tank region.

10. A method of treating sewage comprising introducing sewage into a tank or other container (10), preferably installed in the ground, forming a liquid comprising partially-treated sewage and biomass, and passing biomass material through a biological filter (42),

characterised in that the filter (42) is situated in the tank or container (10) above the liquid and the biomass material is pumped from a lower location within the sewage biomass to an upper location above the filter (42) to cause the pumped biomass material to flow downwardly through a plurality of inclined or at least substantially upright filter passages (43) of the biological filter (42), whereby the biomass is recycled and oxidised.

11. A method according to claim 10, in which the biomass material is air-pumped from the lower location within the sewage biomass to the upper location above the filter (42).

12. A method according to claim 10 or 11, in which the biological filter (42) is provided with a large void volume and a high surface area.

13. A method according to claim 10,11, or 12, in which the biological filter is provided with a matrix comprising an open mesh or random fibrous material.

14. A method according to claim 14,15 or 16, in which the biological filter (42) is provided with a matrix comprising a plurality of upright or inclined sheets or plates (52) of high capillarity alternating with sheets or plates (53) of a dimpled, corrugated or other raised surface to define therebetween the plurality of inclined or at least substantially upright filter passages (43).

15. A method according to any of claims 10 to 14, in which treated liquid sewage is removed from the tank or other container (10) through an outlet (18) via a balancing arrangement for reducing the effect of surge flows of liquid sewage towards the outlet (18).

16. A method according to claim 15, in which the balancing arrangement is provided by a combination of a final settling tank region (44) within the tank or other container (10) and the or at least one of the air lift tubes (39,40) extending from a lower location within the sewage biomass to an upper location above the biological filter (42), whereby the or each air lift tube (39,40) gradually pumps treated liquid sewage to the final settling tank region (44) for subsequent removal via the outlet (18).

17. A method according to claim 16, in which at least a portion of the biological filter (42) extends over the final settling tank region (44).

18. A method according to claim 17, in which the balancing arrangement is provided by a capillary material (36) which is located between an upper part of the final settling tank region (44) of the tank or other container (10) and the outlet (18) and which causes treated liquid sewage at the level of the upper part of the final settling tank region (44) to flow under capillary action from said part to the outlet (18).

19. A method according to claim 18, in which the capillary material (36) is disposed over a weir located between the final settling tank region (44) and the outlet (18) above the latter.

0119818

FIG.1.

FIG.2.

PLAN

52

42

53

53

ENLARGED TO FULL SCALE

FIG.3.

53

FIG.4.